Europäisches Patentamt

European Patent Office

Office européen des brevets

(11) Veröffentlichungsnummer: **0 206 428**
A2

# (12) EUROPÄISCHE PATENTANMELDUNG

(21) Anmeldenummer: **86201090.7**

(51) Int. Cl.⁴: **A 23 G 9/12,** F 25 D 3/08

(22) Anmeldetag: **23.06.86**

(30) Priorität: **26.06.85 AT 1903/85**

(43) Veröffentlichungstag der Anmeldung: **30.12.86**
**Patentblatt 86/52**

(84) Benannte Vertragsstaaten: **DE FR GB IT NL SE**

(71) Anmelder: **N.V. Philips' Gloeilampenfabrieken,**
**Groenewoudseweg 1, NL-5621 BA Eindhoven (NL)**

(72) Erfinder: **Bukoschek, Romuald Leander, INT.**
**OCTROOIBUREAU B.V. Prof. Holstlaan 6, NL-5656 AA**
**Eindhoven (NL)**
Erfinder: **Ramusch, Wolfgang, INT. OCTROOIBUREAU**
**B.V. Prof. Holstlaan 6, NL-5656 AA Eindhoven (NL)**
Erfinder: **Schröder, Johann, INT. OCTROOIBUREAU B.V.**
**Prof. Holstlaan 6, NL-5656 AA Eindhoven (NL)**

(74) Vertreter: **Bos, Kornelis Sjoerd et al, INTERNATIONAAL**
**OCTROOIBUREAU B.V. Prof. Holstlaan 6, NL-5656 AA**
**Eindhoven (NL)**

(54) Speiseeismaschine und Kältepatrone für eine solche Speiseeismaschine.

(57) Bei einer Speiseeismaschine mit einem zylindrischen Behälter (1), in den eine scheibenförmige Kältepatrone (3) einlegbar ist, und mit einem Elektromotor (4), der über ein Getriebe (5) eine zentral zum Behälter verlaufende Welle (6) antreibt, die ein mindestens mit der Kältepatrone zusammenwirkendes Schab- und Rührwerkzeug (8) trägt, ist die Kältepatrone umfangsseitig mit einer vorspringenden durchgehenden Umrandung (10) und der Behälter umfangsseitig mit einer in das Behälterinnere vorspringenden Abstufung (11) versehen, auf der sich bei in die Speiseeismaschine eingelegter Kältepatrone die an ihr vorgesehene vorspringende Umrandung abstützt, wobei mindestens die dem Schab- und Rührwerkzeug abgewandte Wand (12) der Kältepatrone mit Abstand gegenüber dem Behälter verläuft.

"Speiseeismaschine und Kältepatrone für eine solche Speiseeismaschine".


Die Erfindung betrifft eine Speiseeismaschine mit
einem zylindrischen Behälter, in den eine scheibenförmige
Kältepatrone einlegbar ist, und mit einem Elektromotor,
der über ein Getriebe eine zentral zum Behälter verlaufende Welle antreibt, die ein mindestens mit der Kältepatrone
zusammenwirkendes Schab- und Rührwerkzeug trägt. Eine
derartige Speiseeismaschine, die als Haushaltgerät Verwendung findet ist aus der DE-OS 28 31 592 bekannt. Bei
dieser bekannten Speiseeismaschine liegt die Kältepatrone
am Boden des Behälters auf, wobei ihre Umfangsfläche mit
etwas Abstand zur Umfangsfläche des Behälters verläuft,
um das Einlegen und das Herausnehmen der Kältepatrone zu
gewährleisten. Somit besteht rund um die Kältepatrone
gegenüber dem Behälter ein freier Raum, der sich beim Einfüllen der Speiseeismischung mit dieser füllt und die dann
rund um die Kältepatrone anfriert, was zur Folge hat,
dass die Kältepatrone nicht ohne weiteres aus dem Behälter
herausgenommen werden kann. Durch das Aufliegen der Kältepatrone am Boden des Behälters kann es auch durch verschiedene Höhen der Kältepatrone zu Abstandsänderungen gegenüber dem Schab- und Rührwerkzeug kommen, was das Abschaben
des sich an der Kältepatrone bildenden Speiseeis beeinträchtigen kann.

Die Erfindung hat sich zum Ziel gesetzt, eine
Speiseeismaschine der eingangs angeführten Gattung hinsichtlich ihrer Wirkungsweise zu verbessern und die vorgenannten
Schwierigkeiten zu beseitigen. Erfindungsgemäss wird dies
dadurch erreicht, dass die Kältepatrone umfangsseitig mit
einer vorspringenden durchgehenden Umrandung versehen ist
und dass der Behälter umfangsseitig mit einer in das Behälterinnere vorspringenden Abstufung versehen ist, auf
der sich bei in die Speiseeismaschine eingelegter Kältepatrone die an ihr vorgesehene vorspringende Umrandung abstützt, wobei mindestens die dem Schab- und Rührwerkzeug abgewandte Wand der Kältepatrone mit Abstand gegenüber dem Behälter verläuft. Auf diese Weise ist erreicht, dass die vorspringende Umrandung an der Kältepatrone im Zusammenwirken mit der umfangsseitigen Abstufung am Behälter eine Abdichtung des unterhalb der vorspringenden Umrandung liegenden freien Raumes zwischen der Kältepatrone und dem Behälter bildet, so dass praktisch keine Speiseeismischung in diesen freien Raum eindringen kann. Eine solche Abdichtung wird noch dadurch begünstigt, dass die Speiseeismischung im Bereich der vorspringenden Umrandung der Kältepatrone anfriert und dadurch den Zugang zum freien Raum zwischen der Kältepatrone und dem Behälter abschliesst. Da dieser freie Raum somit keinen störenden Einfluss mehr hat, ist auch die Dimensionierung der Kältepatrone hinsichtlich ihres Durchmessers nicht mehr kritisch. Dadurch, dass die umfangsseitige Abstufung am Behälter auf einem solchen Niveau vorgesehen ist, dass die dem Schab- und Rührwerkzeug abgewandte Wand der Kältepatrone mit Abstand gegenüber dem Behälter verläuft, ist bodenseitig zum Behälter ebenfalls ein freier Raum geschaffen, so dass auch die höhenmässige Dimensionierung der Kältepatrone nicht mehr kritisch ist, wobei ausserdem sichergestellt ist, dass die dem Schab- und Rührwerkzeug zugewandte Wand der Kältepatrone stets auf gleichem Niveau liegt und damit keine Abstandsänderungen gegenüber dem Schab- und Rührwerkzeug auftreten, wodurch ein sicheres Zusammenwirken des Schab- und Rührwerkzeuges mit der Kältepatrone gewährleistet ist. Ein solcher bodenseitiger freier Raum gestattet auch Volumenänderungen der Kältepatrone, die in Abhängigkeit ihrer Temperatur auftreten können.

Als vorteilhaft hat sich erwiesen, wenn die Kältepatrone durch mindestens zwei miteinander verbundene Teile gebildet ist, wobei ein Teil aus der dem Schab- und Rührwerkzeug zugewandten Wand und der andere Teil aus einem wannenförmigen Bodenteil besteht und die vorspringende Umrandung im Bereich der Verbindung dieser beiden Teile vorgesehen ist. Auf diese Weise kann die vorspringende Umrandung sehr einfach im Zuge der Herstellung der Kältepatrone gebildet werden. Weiters liegt praktisch das gesamte Volumen der Kältepatrone unterhalb der vorspringenden
Umrandung, wodurch im Zusammenwirken mit der am Behälter
vorgesehenen umfangsseitigen Abstufung eine besonders
günstige Abdichtung des freien Raumes zwischen der Kältepatrone und dem Behälter gegeben ist.

Für die Verbindung der beiden Teile der Kältepatrone und die Ausbildung der vorspringenden Umrandung
gibt es verschiedene Möglichkeiten. So kann beispielsweise
der wannenförmige Bodenteil einen geringeren Aussendurchmesser als die dem Schab- und Rührwerkzeug zugewandte Wand
haben, wobei dann die Wand auf den Bodenteil aufgesetzt
und mit diesem verschweisst wird. Der über den Bodenteil
hinausragende Abschnitt der dem Schab- und Rührwerkzeug
zugewandten Wand bildet dann unmittelbar die vorspringende Umrandung der Kältepatrone. Im Hinblick auf eine besonders einfache Herstellung und sichere Verbindung der
beiden Teile hat sich als besonders vorteilhaft erwiesen,
wenn der wannenförmige Bodenteil einen nach aussen abgewinkelten oberen Rand aufweist, welcher an der dem Schab-
und Rührwerkzeug zugewandten Wand der Kältepatrone anliegt
und diese beiden Teile im Bereich ihrer umfangsseitigen
Ränder miteinander verbunden sind. Auf diese Weise liegen
die beiden Teile sicher aneinander an und können daher
gut miteinander verbunden werden.

Für das Verbinden der beiden Teile der Kältepatrone hat sich als sehr zweckmässig und einfach erwiesen,
wenn die Verbindung der beiden Teile durch eine Schweissung erfolgt.

Auf einfache Weise kann auch die Verbindung der
beiden Teile durch eine Falzung erfolgen.

Als sicher und zweckmässig hat sich auch erwiesen,
wenn die Verbindung der beiden Teile durch einen einen U-
förmigen Querschnitt aufweisenden Klemmring erfolgt.

In diesem Zusammenhang hat sich weiters als vorteilhaft erwiesen, wenn die dem Schab- und Rührwerkzeug
zugewandte Wand der Kältepatrone im Bereich ihres Umfanges eine dem Bodenteil zugewandte Nut aufweist, in welche
der abgewinkelte obere Rand des Bodenteiles eingreift und
die Verbindung der beiden Teile durch einen in die Nut
eingesetzten, den abgewinkelten Rand des Bodenteiles übergreifenden Klemmring erfolgt. Auf diese Weise wird eine
besonders sichere und einfach herzustellende Verbindung
der beiden Teile erhalten.

Zur Bildung der vorspringenden Umrandung an der
Kältepatrone hat sich auch als vorteilhaft erwiesen, wenn
die an der Kältepatrone vorgesehene vorspringende Umrandung durch einen auf die umfangsseitige Wand der Kältepatrone aufgezogenen Ring gebildet ist. Auf diese Weise kann die
Kältepatrone als solche vorerst vollständig fertiggestellt
werden und daran anschliessend wird an ihr die vorspringende Umrandung gebildet.

Als zweckmässig hat sich auch erwiesen, wenn die
an der Kältepatrone vorgesehene vorspringende Umrandung
durch eine U-förmige Stauchung der umfangsseitigen Wand
der Kältepatrone gebildet ist. Auf diese Weise kann die
vorspringende Umrandung unmittelbar an der Kältepatrone
ausgeformt werden.

Weiters betrifft die Erfindung eine Kältepatrone
für eine wie im vorstehenden beschriebene Speiseeismaschine.
Erfindungsgemäss ist vorgesehen, dass die Kältepatrone
umfangsseitig eine vorspringende durchgehende Umrandung
aufweist.

Die Erfindung wird im folgenden anhand der Zeichnungen, in denen einige Ausführungsbeispiele der Erfindung
dargestellt sind, auf die sie jedoch nicht beschränkt
sein soll, näher erläutert.

Fig. 1 zeigt eine erfindungsgemässe Speiseeismaschine, teilweise im Schnitt in Seitenansicht.

Fig. 2 zeigt ausschnittsweise die Ausbildung einer
vorspringenden Umrandung unmittelbar durch den Abschnitt
einer Wand einer aus zwei Teilen bestehenden Kältepatrone.

Fig. 3 zeigt ausschnittsweise die Ausbildung einer
vorspringenden Umrandung einer aus zwei Teilen bestehenden
Kältepatrone, wobei der Bodenteil einen nach aussen abgewinkelten oberen Rand aufweist, welcher an der dem Schab-
und Rührwerkzeug zugewandten Wand der Kältepatrone anliegt
und die Verbindung der beiden Teile durch Schweissen erfolgt.

Fig. 4 zeigt bei einer Ausbildung der vorspringenden Umrandung nach Fig. 3 die Verbindung der beiden Teile
durch eine Falzung.

Fig. 5 zeigt bei einer Ausbildung der vorspringenden
Umrandung nach Fig. 3 die Verbindung der beiden Teile durch
einen einen U-förmigen Querschnitt aufweisenden Klemmring.

Fig. 6 zeigt ausschnittsweise eine Ausführungsform,
bei der die an der Kältepatrone vorgesehene vorspringende
Umrandung durch einen auf die Kältepatrone umfangsseitig
aufgezogenen Ring gebildet ist.

Fig. 7 zeigt ausschnittsweise eine Ausführungsform,
bei der die an der Kältepatrone vorgesehene vorspringende
Umrandung durch eine U-förmige Stauchung der umfangsseitigen Wand der Kältepatrone gebildet ist.

Fig. 8 zeigt bei einer Ausbildung der vorspringenden Umrandung nach Fig. 3 die Verbindung der beiden Teile
durch einen einen kreisförmigen Querschnitt aufweisenden
Klemmring, der in eine an der dem Schab- und Rührwerkzeug
zugewandten Wand vorgesehene Nut eingesetzt ist und dabei den abgewinkelten Rand des Bodenteiles übergreift.

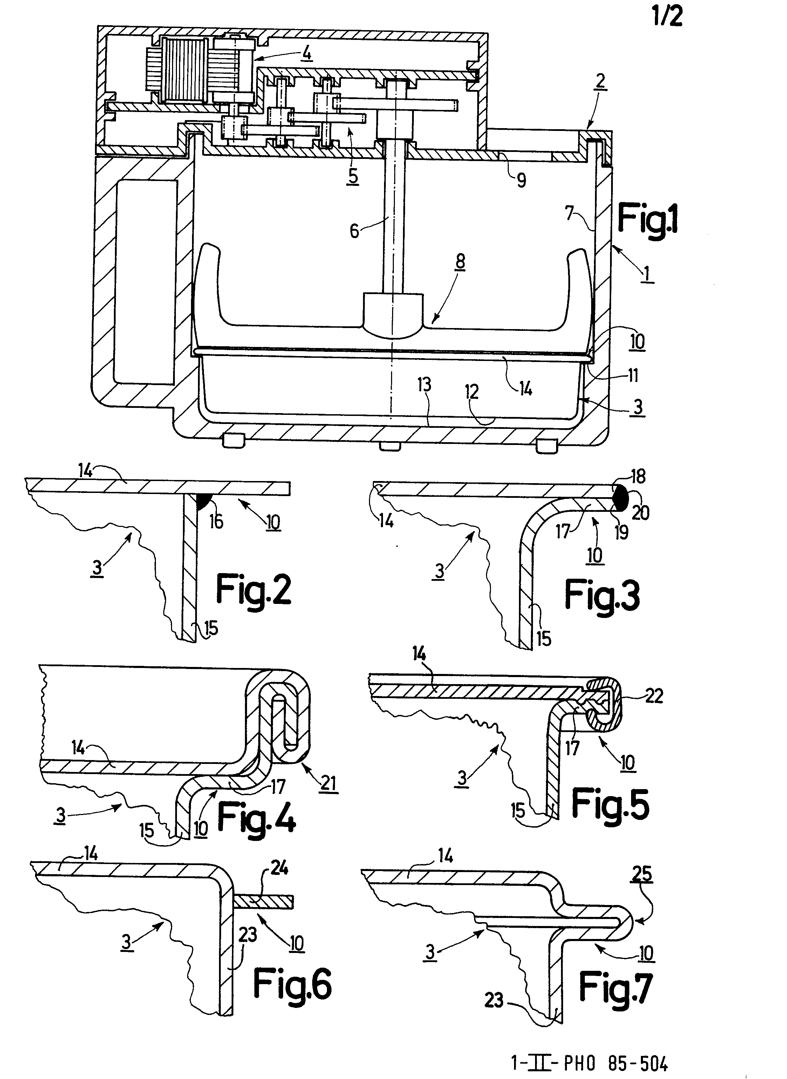

In Fig. 1 ist mit 1 ein thermisch isolierter zylindrischer Behälter bezeichnet, der durch einen Deckel 2
abschliessbar ist. Der Deckel 2 kann hierbei durch hier
nicht dargestellte übliche Verriegelungen in seiner Lage
am Behälter festgelegt werden. In den Behälter 1 ist eine
scheibenförmige Kältepatrone 3 eingelegt, die ein Latentwärmespeichermittel enthält. Im Deckel 2 ist ein Elektromotor 4 untergebracht, der über ein Getriebe 5, das hier
als dreistufiges Zahnradgetriebe ausgebildet ist, eine
zentral zum Behälter 1 verlaufende Welle 6 antreibt, die
ein mit der Kältepatrone 3 und der Behälterwand 7 zusammenwirkendes Schab- und Rührwerkzeug 8 trägt. Falls erwünscht, kann der Elektromotor 4 zusammen mit dem Getriebe
als eine vom Deckel 2 abnehmbare Baueinheit ausgebildet

sein. Ebenso kann die Welle 6 zusammen mit dem Schab- und Rührwerkzeug mittels einer Steckverbindung vom Getriebe lösbar sein. Zwischen dem Getriebe 5 und der Welle 6 kann auch eine Federanordnung vorgesehen sein, welche das Schab- und Rührwerkzeug unter Federdruck an der Kältepatrone 3 angelegt hält, um das Abschaben des sich an der Kältepatrone bildenden Speiseeis besonders sicher zu gestalten.

Vor der Inbetriebnahme der Speiseeismaschine wird die Kältepatrone 3 beispielsweise in einem Tiefkühlfach eines Kühlschrankes abgekühlt und danach in den Behälter 1 eingelegt. Hierauf wird der Deckel 2 mit dem Schab- und Rührwerkzeug 8 auf den Behälter 1 aufgesetzt, wonach durch die im Deckel 2 vorgesehene Einfüllöffnung 9 eine Speiseeismischung eingefüllt wird. Nach dem Einschalten des Elektromotors 4 beginnt sich das Schab- und Rührwerkzeug 8 zu drehen, wobei die Speiseeismischung vermischt und das sich jeweils an der Kältepatrone bildende Speiseeis abgeschabt und wieder mit der Speiseeismischung vermischt wird, dies solange, bis nur noch Speiseeis mit der gewünschten Temperatur und Konsistenz vorhanden ist.

Bei einer derartigen Speiseeismaschine ist nun vorgesehen, dass die Kältepatrone 3 umfangsseitig mit einer vorspringenden durchgehenden Umrandung 10 und der Behälter 1 umfangsseitig mit einer in das Behälterinnere vorspringenden Abstufung 11 versehen ist, auf der sich bei in die Speiseeismaschine eingelegter Kältepatrone 3 die an ihr vorgesehene vorspringende Umrandung 10 abstützt, wobei insbesondere die dem Schab- und Rührwerkzeug 8 abgewandte Wand 12 der Kältepatrone 3 mit Abstand gegenüber dem Boden 13 des Behälters 1 verläuft. Durch das Aufliegen der vorspringenden durchgehenden Umrandung 10 der Kältepatrone 3 an der Abstufung 11 des Behälters 1 wird eine Abdichtung des unterhalb der Umrandung 10 vorhandenen freien Raumes zwischen der Kältepatrone 3 und dem Behälter 1 erreicht, so dass in diesen freien Raum praktisch keine Speiseeismischung eindringen und dort an der Kältepatrone 3 anfrieren kann. Eine solche Abdichtung wird noch dadurch begünstigt, dass die Speiseeismischung im Bereich der vor-

0 206 428
24-9-1985

springenden Umrandung 10´anfriert und dadurch den Zugang zum freien Raum zwischen der Kältepatrone 3 und dem Behälter 1 noch besser abschliesst. Damit besteht die Möglichkeit, diesen freien Raum so gross zu wählen, dass Toleranzen in den Abmessungen der Kältepatrone, dies sowohl umfangsmässig als auch höhenmässig, sich beim Einlegen einer Kältepatrone in den Behälter bzw. beim Herausnehmen derselben aus dem Behälter nicht mehr störend bemerkbar machen können. Ausserdem bietet dieser freie Raum die Möglichkeit, Volumenänderungen der Kältepatrone aufzunehmen, die sich nach ihrer jeweiligen Temperatur ergeben können. Dadurch, dass nunmehr die Umrandung 10 der Kältepatrone 3 im Zusammenwirken mit der Abstufung 11 am Behälter 1 den Abstand der dem Schab- und Rührwerkzeug zugewandten Wand der Kältepatrone zu dem Schab- und Rührwerkzeug bestimmt, können sich höhenmässige Toleranzen in den Abmessungen der Kältepatrone hinsichtlich des Zusammenwirkens mit dem Schab- und Rührwerkzeug nicht mehr störend bemerkbar machen, wodurch ein sicheres Abschaben des sich an der Kältepatrone bildenden Speiseeises gewährleistet ist. In diesem Zusammenhang und um die Abdichtung möglichst wirkungsvoll zu gestalten, ist es dabei am zweckmässigsten, wenn die vorspringende Umrandung 10 möglichst nahe bei der dem Schab- und Rührwerkzeug 8 zugewandten Wand 14 der Kältepatrone liegt.

Für die Ausbildung einer solchen vorspringenden Umrandung an einer Kältepatrone gibt es verschiedene Möglichkeiten, die anhand der Figuren 2 bis 8 erläutert werden.

Fig. 2 zeigt eine aus zwei Teilen gebildete Kältepatrone, wobei der eine Teil aus der dem Schab- und Rührwerkzeug zugewandten Wand 14 und der andere Teil aus einem wannenförmigen Bodenteil 15 besteht. Die scheibenförmig ausgebildete Wand 14 hat einen grösseren Aussendurchmesser als der Bodenteil 15, wodurch bei auf den Bodenteil 15 aufgesetzter Wand 14 eine vorspringende durchgehende Umrandung 10 gebildet ist, die unmittelbar aus einem Abschnitt der Wand 14 besteht. Die Verbindung der Wand 14 mit dem

0 206 428
24-9-1985

Bodenteil 15 erfolgt hier durch eine Schweissnaht 16. Falls erwünscht, kann natürlich der Bodenteil 15 beispielsweise auch aus zwei Teilen zusammengesetzt sein.

Beim Ausführungsbeispiel nach Fig. 3 hat der wannenförmige Bodenteil 15 einen nach aussen abgewinkelten oberen Rand 17, auf dem die dem Schab- und Rührwerkzeug zugewandte Wand 14 der Kältepatrone aufliegt. Diese beiden Teile werden dann im Bereich ihrer umfangsseitigen Ränder 18 und 19 miteinander verbunden. Beim vorliegenden Ausführungsbeispiel erfolgt diese Verbindung durch eine Schweissnaht 20. Wie ersichtlich, ist die vorspringende Umrandung 10 hier durch die aneinander anliegenden Abschnitte der Wand 14 und des abgewinkelten Randes 17 gebildet.

Beim Ausführungsbeispiel nach Fig. 4 erfolgt die Verbindung der beiden Teile 14 und 17 durch eine Falzung 21.

Beim Ausführungsbeispiel nach Fig. 5 ist zum Verbinden der beiden Teile 14 und 17 ein einen U-förmigen Querschnitt aufweisenden Klemmring 22 vorgesehen. Damit die Verbindung der beiden Teile 14 und 17 einwandfrei dicht ist, sind deren aneinander liegende Flächen nach Art einer Labyrinthdichtung mit zueinander korrespondierenden, ringförmigen, ineinandergreifenden Erhebungen bzw. Vertiefungen versehen. Bei in die Speiseeismaschine eingelegter Kältepatrone liegt dann der Klemmring 22 an der Abstufung 11 des Behälters 1 auf. Falls erwünscht, kann aber die Abstufung 11 auch mit einer Rinne versehen werden, welche den Klemmring 22 freistellt, so dass der abgewinkelte Rand 17 an der Abstufung 11 aufliegt.

Wie Fig. 6 zeigt, ist bei diesem Ausführungsbeispiel die vorspringende Umrandung 10 durch einen auf die umfangsseitige Wand 23 der Kältepatrone aufgezogenen Ring 24 gebildet.

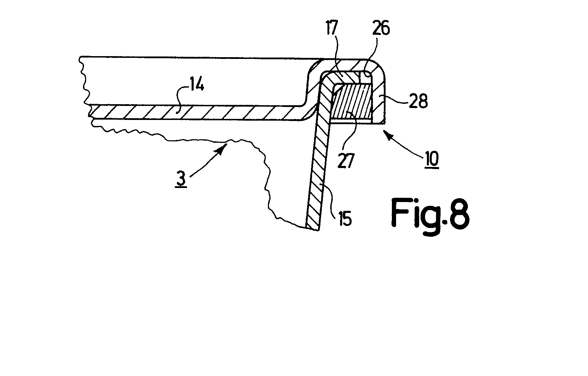

Beim Ausführungsbeispiel nach Fig. 7 ist die an der Kältepatrone vorgesehene vorspringende Umrandung 10 durch eine U-förmige Stauchung 25 der umfangsseitigen Wand 23 der Kältepatrone gebildet.

Wie Fig. 8 zeigt, is bei diesem Ausführungsbeispiel, die dem Schab- und Rührwerkzeug zugewandte Wand 14 im Bereich ihres Umfanges mit einer Nut 26 versehen, in welche der abgewinkelte obere Rand 17 des wannenförmigen Bodenteiles 15 eingreift. Diesen abgewinkelten Rand 17 übergreifend, ist in die Nut 26 ein Klemmring 27 eingesetzt, wodurch die beiden Teile 14 und 17 sicher miteinander verbunden sind. Die vorspringende Umrandung 10 ist hier durch den die Nut 26 begrenzenden Abschnitt 28 der Wand 14 gebildet.

Wie ersichtlich, besteht somit eine Reihe von Abwandlungen für die Art und Weise der Ausbildung der vorspringenden Umrandung an der Kältepatrone, ohne dass dabei der Rahmen der Erfindung verlassen wird.

PATENTANSPRÜCHE:

1.　　　　Speiseeismaschine mit einem zylindrischen Behälter, in den eine scheibenförmige Kältepatrone einlegbar ist, und mit einem Elektromotor, der über ein Getriebe eine zentral zum Behälter verlaufende Welle antreibt, die ein mindestens mit der Kältepatrone zusammenwirkendes Schab- und Rührwerkzeug trägt, dadurch gekennzeichnet, dass die Kältepatrone umfangsseitig mit einer vorspringenden durchgehenden Umrandung versehen ist und dass der Behälter umfangsseitig mit einer in das Behälterinnere vorspringenden Abstufung versehen ist, auf der sich bei in die Speiseeismaschine eingelegter Kältepatrone die an ihr vorgesehene vorspringende Umrandung abstützt, wobei mindestens die dem Schab- und Rührwerkzeug abgewandte Wand der Kältepatrone mit Abstand gegenüber dem Behälter verläuft.

2.　　　　Speiseeismaschine nach Anspruch 1, dadurch gekennzeichnet, dass die Kältepatrone durch mindestens zwei miteinander verbundene Teile gebildet ist, wobei ein Teil aus der dem Schab- und Rührwerkzeug zugewandten Wand und der andere Teil aus einem wannenförmigen Bodenteil besteht und die vorspringende Umrandung im Bereich der Verbindung dieser beiden Teile vorgesehen ist.

3.　　　　Speiseeismaschine nach Anspruch 2, dadurch gekennzeichnet, dass der wannenförmige Bodenteil einen nach aussen abgewinkelten oberen Rand aufweist, welcher an der dem Schab- und Rührwerkzeug zugewandten Wand der Kältepatrone anliegt und diese beiden Teile im Bereich ihrer umfangsseitigen Ränder miteinander verbunden sind.

4.　　　　Speiseeismaschine nach Anspruch 3, dadurch gekennzeichnet, dass die Verbindung der beiden Teile durch eine Schweissung erfolgt.

5.　　　　Speiseeismaschine nach Anspruch 3, dadurch gekennzeichnet, dass die Verbindung der beiden Teile durch

0 206 428
24-9-1985

eine Falzung erfolgt.

6.      Speiseeismaschine nach Anspruch 3, dadurch gekennzeichnet, dass die Verbindung der beiden Teile durch einen einen U-förmigen Querschnitt aufweisenden Klemmring erfolgt.

7.      Speiseeismaschine nach Anspruch 3, dadurch gekennzeichnet, dass die dem Schab- und Rührwerkzeug zugewandte Wand der Kältepatrone im Bereich ihres Umfanges eine dem Bodenteil zugewandte Nut aufweist, in welche der abgewinkelte obere Rand des Bodenteiles eingreift und die Verbindung der beiden Teile durch einen in die Nut eingesetzten, den abgewinkelten Rand des Bodenteiles übergreifenden Klemmring erfolgt.

8.      Speiseeismaschine nach Anspruch 1, dadurch gekennzeichnet, dass die an der Kältepatrone vorgesehene vorspringende Umrandung durch einen auf die umfangsseitige Wand der Kältepatrone aufgezogenen Ring gebildet ist.

9.      Speiseeismaschine nach Anspruch 1, dadurch gekennzeichnet, dass die an der Kältepatrone vorgesehene vorspringende Umrandung durch eine U-förmige Stauchung der umfangsseitigen Wand der Kältepatrone gebildet ist.

10.      Kältepatrone für eine Speiseeismaschine nach einem der vorhergehenden Ansprüche, dadurch gekennzeichnet, dass sie umfangsseitig eine vorspringende durchgehende Umrandung aufweist.

**Fig.1**

**Fig.2**

**Fig.3**

**Fig.4**

**Fig.5**

**Fig.6**

**Fig.7**

Fig.8